# EUROPEAN PATENT SPECIFICATION

(11) **EP 2 717 625 B1**
(45) Date of publication and mention of the grant of the patent: **17.03.2021**
(21) Application number: 12800854.7
(22) Date of filing: 18.06.2012
(51) Int. Cl.: H04W 36/04, H04W 36/32, H04W 36/24, H04W 36/00, H04W 48/12, H04W 48/20, H04W 24/02, H04W 84/04, H04W 36/14

(54) **METHOD AND DEVICE FOR CELL CHANGING IN HETEROGENEOUS NETWORK**
VERFAHREN UND VORRICHTUNG ZUM WECHSELN EINER ZELLE IN EINEM HETEROGENEN NETZWERK
PROCÉDÉ ET DISPOSITIF POUR CHANGER DE CELLULE DANS UN RÉSEAU HÉTÉROGÈNE

(30) Priority: 17.06.2011 CN 201110164411
(43) Date of publication of application: 09.04.2014
(73) Proprietor: Huawei Technologies Co., Ltd., Longgang District Shenzhen, Guangdong 518129 (CN)
(72) Inventor: ZHANG, Tao, Shenzhen Guangdong 518129 (CN); LIN, Bo, Shenzhen Guangdong 518129 (CN)
(74) Representative: Isarpatent
(86) International application number: PCT/CN2012/077081
(87) International publication number: WO 2012/171503

(56) References cited:
- WO-A2-2011/013967
- WO-A2-2011/013967
- CN-A- 101 662 776
- CN-A- 101 730 081
- CN-A- 101 742 549
- CN-Y- 201 365 345
- GB-A- 2 358 550
- US-A1- 2005 037 798
- US-A1- 2008 318 643
- US-A1- 2009 117 905
- NOKIA: "HCS measurement rules & high-mobility", 3GPP DRAFT; R2-041433 HCS MEASUREMENT RULES HIGH-MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Prague, Czech Republic; 20040816 - 20040820, 10 August 2004 (2004-08-10), XP050602392, [retrieved on 2004-08-10]
- LG ELECTRONICS INC: "Mobility state detection enhancement for HetNet", 3GPP DRAFT; R2-113302 MOBILITY STATE DETECTION ENHANCEMENT FOR HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495431, [retrieved on 2011-05-03]
- ALCATEL-LUCENT SHANGHAI BELL ET AL: "Discussion on mobility estimation for HetNet", 3GPP DRAFT; R2-113181-DISCUSSION ON MOBILITY ESTIMATION FOR HTN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495353, [retrieved on 2011-05-03]
- RAPPORTEUR (HUAWEI): "Email report on Home-(e)NB mobility, remaining issues [63bis_LTE_B04]", 3GPP DRAFT; R2-086778, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081113, 13 November 2008 (2008-11-13), XP050321605, [retrieved on 2008-11-13]
- T-MOBILE ET AL: "Correction to cell selection and reselection parameters to enable enhanced cell reselection", 3GPP DRAFT; R2-050733, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Scottsdale, USA; 20050303, 3 March 2005 (2005-03-03), XP050127931, [retrieved on 2005-03-03]
- "3rd Generation Partnership Project; Technical Specification Group Radio Access Network; User Equipment (UE) procedures in idle mode and procedures for cell reselection in connected mode (Release 10)", 3GPP STANDARD; 3GPP TS 25.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 28 March 2011 (2011-03-28), pages 1-51, XP050476462, [retrieved on 2011-03-28]
- HUAWEI: "Need of mobility state estimation enhancement in HetNet", 3GPP DRAFT; R2-115170, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540966, [retrieved on 2011-10-04]
- YIXUE LEI ET AL: "Enhanced mobility state detection based mobility optimization for femto cells in LTE and LTE-advanced networks", IET INTERNATIONAL CONFERENCE ON COMMUNICATION TECHNOLOGY AND APPLICATION (ICCTA 2011), 14 October 2011 (2011-10-14), pages 341-345, XP055230529, Beijing DOI: 10.1049/cp.2011.0687 ISBN: 978-1-84919-470-9

## Description

### TECHNICAL FIELD

Embodiments of the present invention relate to communications technologies, and in particular, to a method and an apparatus for cell changing in a heterogeneous network.

### BACKGROUND

With the development of communications technologies, a new form of network deployment, that is, a heterogeneous network (Heterogeneous Network, HetNet), is gradually introduced to radio networks. In a heterogeneous network, a macro base station and a low power node can coexist. A cell of a macro base station has a wide coverage, and may be called a macro cell; and a cell of a low power node has a narrower coverage than a macro cell, and may be called a small cell. The macro cell provides seamless coverage for users, while small cells increase capacity of a network system. In an actual network, a macro cell and a small cell may use the same frequency or different frequencies. A heterogeneous network in which a macro cell and a small cell use different frequencies is called a multi-frequency heterogeneous network, and a heterogeneous network in which a macro cell and a small cell use the same frequency is called a co-frequency heterogeneous network.

When a user equipment (UE, User Equipment) moves in a multi-frequency heterogeneous network, a cell of the user equipment will change. The change of a cell on which an idle user equipment camps is called cell reselection, and the change of a serving cell of a connected user equipment is called handover.

In the prior art, assuming that an idle user equipment moves in a network, a cell reselection is: all cells set the same frequency priority order for different user equipments, and all user equipments in the network preferentially measure and reselect a frequency of a higher priority. However, in this cell reselection method in the prior art, if a frequency priority of a macro cell is set higher than a frequency priority of a small cell, all user equipments in the network will preferentially reselect the macro cell, which is very likely to cause overburden of the macro cell. If a frequency priority of a small cell is set higher than a frequency priority of a macro cell, all user equipments in the network will preferentially reselect the small cell, which greatly relieves the burden of the macro cell. However, because the coverage of a small cell is small, a moving user equipment that reselects a small cell will easily leave the coverage of the small cell and enter the coverage of another small cell or return to the coverage of the macro cell. In this case, the user equipment has to perform cell reselection again. Frequent cell reselections consume much battery energy of the user equipment. In addition, because all small cells in the network together cannot provide seamless coverage, some relatively static user equipments may stay within gaps between the small cells for a long time, where the gaps are within the coverage of the macro cell. If the user equipments always measure the small cells preferentially, the user equipments will measure no small cell in a very long time, and these measurements will waste much battery energy of the user equipments.

The document "HCS measurement rules & high-mobility", NOKIA, 3GPP DRAFT; R2-041433 HCS MEASUREMENT RULES HIGH-MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 10.08.2004, vol. TSG RAN, no. Prague, Czech Republic; 20040816 - 20040820, discusses inconsistencies with regard to hierarchical cell structure (HCS) measurement rules and reselection.

GB 2 358 550 A discloses a battery saving strategy in cellular systems based on a mobile assisted handover process. A portable cellular device measures a quality parameter such as signal strength or interference for signals associated with nearby cells. The cell signals are arranged into at least two groups of relatively high and low quality signals. High quality signals are monitored at a high sampling rate, lower quality signals are monitored at a lower rate.

The document "Email report on Home-(e)NB mobility, remaining issues [63bis_LTE_B04]", RAPPORTEUR (HUAWEI), 3GPP DRAFT; R2-086778, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, no. Prague, Czech Republic; 13 November 2008 discloses using a speed-dependent scaling factor and a CSG specific scaling factor to adjust the Treselection parameter to optimize the cell reselection with respect both to the speed of the UE and the reselection towards a preferred CSG cell.

WO2011/013967A1 similarly discloses regulating Treselection according to cell size and decreasing Treselection as the UE moving speed increases.

### SUMMARY

The invention is defined in the appended set of claims.

A main objective of the present disclosure is to provide a method and an apparatus for cell changing in a heterogeneous network, which can effectively reduce power consumption of a user equipment.

This is achieved by the features of the independent claims. The following aspects are provided for illustrative purposes only.

One aspect provides a method for cell changing of a user equipment in a heterogeneous network, including:
determining, by the user equipment, a movement state of a user equipment;
determining, by the user equipment, a frequency priority order according to the determined movement state, where: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
performing, by the user equipment, a frequency measurement according to the determined frequency priority order and the determined movement state; and
performing, by the user equipment, a cell change according to the determined frequency priority order and a result of the frequency measurement,
wherein the performing the frequency measurement according to the determined frequency priority order and the determined movement state comprises:
when the movement state is the high movement state in which the number of cell changes in the specified time exceeds the first threshold,
if signal strength or signal quality of a current serving cell is greater than a first demarcation, measuring at least one high-priority frequency in the heterogeneous network at intervals of a first specified time; and
if the signal strength or the signal quality of the current serving cell is less than the first demarcation, measuring all frequencies in the heterogeneous network at intervals of the first specified time;
and
when the movement state is the low movement state in which the number of cell changes in the specified time is lower than the second threshold,
if signal strength or signal quality of a current serving cell is greater than a first demarcation,
measuring at least one high-priority frequency in the heterogeneous network at intervals of a first specified time;
if no cell is found at the at least one high-priority frequency in a second specified time, measuring the at least one high-priority frequency at intervals of a third specified time, wherein the third specified time is greater than the first specified time;
after at least one cell is found at the at least one high-priority frequency, measuring the at least one high-priority frequency at intervals of the first specified time; and
if the signal strength or the signal quality of the current serving cell is less than the first demarcation, measuring all frequencies in the heterogeneous network at intervals of the first specified time, and
wherein performing the cell change, comprises: selecting, by the user equipment, a scaling factor corresponding to the current movement state of the user equipment according to a movement state of a user equipment, and scaling a relevant hysteresis used for cell reselection or handover, and then performing, by the user equipment, the cell change according to the frequency priority order, the result of the frequency measurement and the scaled relevant hysteresis,
wherein the user equipment in the heterogeneous network uses two sets of scaling factors to scale the hysteresis, respectively, and the two sets of scaling factors correspond to the size of a target cell and the movement state of the user equipment, respectively, and
   wherein a first scaling factor among the first set of scaling factors is determined according to the size of the target cell for cell changing, and a second scaling factor among the second set of scaling factors is determined according to the movement state.

Another aspect provides a user equipment, including:
a first determining unit, configured to determine a movement state of the user equipment;
a second determining unit, configured to determine a frequency priority order according to the movement state determined by the first determining unit, where: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
a measuring unit, configured to perform a frequency measurement according to the frequency priority order determined by the second determining unit and the determined movement state determined by the first determining unit; and
a processing unit, configured to perform a cell change according to the frequency priority order determined by the second determining unit and a result of the frequency measurement performed by the measuring unit,
wherein the measuring unit is specifically configured to
when the movement state is the high movement state in which the number of cell changes in the specified time exceeds the first threshold,
if signal strength or signal quality of a current serving cell is greater than a first demarcation, measure at least one high-priority frequency in the heterogeneous network at intervals of a first specified time; and
if the signal strength or the signal quality of the current serving cell is less than the first demarcation, measure all frequencies in the heterogeneous network at intervals of the first specified time;
and
when the movement state is the low movement state in which the number of cell changes in the specified time is lower than the second threshold,
if signal strength or signal quality of a current serving cell is greater than a first demarcation,
measure at least one high-priority frequency in the heterogeneous network at intervals of a first specified time; and
if no cell is found at the at least one high-priority frequency in a second specified time, measure the at least one high-priority frequency at intervals of a third specified time, wherein the third specified time is greater than the first specified time;
measure the at least one high-priority frequency at intervals of the first specified time after at least one cell is found at the at least one high-priority frequency; and
if the signal strength or the signal quality of the current serving cell is less than the first demarcation, measure all frequencies in the heterogeneous network at intervals of the first specified time, and
wherein the processing unit includes:
a receiving module, configured to receive a hysteresis used for cell changing from a current serving cell, where the hysteresis is obtained by the serving cell according to a size of a target cell for cell changing;
a determining module, configured to determine a scaling factor according to the determined movement state;
a scaling module, configured to scale the received hysteresis according to the determined scaling factor; and
a processing module, configured to perform the cell change according to the frequency priority order, the result of the frequency measurement and the scaled hysteresis,
wherein the user equipment in the heterogeneous network uses two sets of scaling factors to scale the hysteresis, respectively, and the two sets of scaling factors correspond to the size of the target cell and the movement state of the user equipment, respectively, and
   wherein a first scaling factor among the first set of scaling factors is determined according to the size of the target cell for cell changing, and a second scaling factor among the second set of scaling factors is determined according to the movement state.

According to the method and the user equipment for cell changing in a heterogeneous network, when performing a cell change, the user equipment selects a frequency priority order according to a movement state of a user equipment; when the user equipment is in a high movement state, the user equipment preferentially changes to a cell with a wide coverage, and therefore, when the user equipment moves frequently, the user equipment will not leave the coverage of the cell easily, which effectively reduces the number of cell changes in the heterogeneous network, effectively reduces the power consumption of the user equipment, the network signaling load, and the data transmission delay, and enhances user experience. When the user equipment is in a low movement state, the user equipment preferably changes to a cell with a small coverage, which effectively relieves the load of the cell with a wide coverage and effectively enhances performance of the heterogeneous network.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention.
FIG. 1 is a flowchart of a method for cell changing in a heterogeneous network according to an embodiment of the present invention;
FIG. 2 is a schematic diagram of a multi-frequency heterogeneous network according to an example;
FIG. 3 is a flowchart of a method for cell changing in a heterogeneous network according to an example;
FIG. 4 is a flowchart of a method for cell changing in a heterogeneous network according to an example;
FIG. 5 is a flowchart of a method for cell changing in a heterogeneous network according to an example;
FIG. 6 is a flowchart of a method for cell changing in a heterogeneous network according to an example;
FIG. 7 is a structural block diagram of a user equipment according to an embodiment of the present invention;
FIG. 8 is a structural block diagram of a first determining unit of a user equipment according to an example;
FIG. 9 is a structural block diagram of a first determining unit of a user equipment according to an example;
FIG. 10 is a structural block diagram of a user equipment according to an example;
FIG. 11 is a structural block diagram of a processing unit of a user equipment according to an example;
FIG. 12 is a structural block diagram of a processing unit of a user equipment according to an example;
FIG. 13 is a structural block diagram of a user equipment according to an example;
FIG. 14 is a structural block diagram of a first determining unit of a user equipment according to an example;
FIG. 15 is a structural block diagram of a user equipment according to an example;
FIG. 16 is a structural block diagram of a user equipment according to an example;
FIG. 17 is a structural block diagram of a scaling unit of a user equipment according to an example;
FIG. 18 is a structural block diagram of a scaling unit of a user equipment according to an example; and
FIG. 19 is a structural block diagram of a scaling unit of a user equipment according to an example.

### DESCRIPTION OF EMBODIMENTS

The following clearly and completely describes the technical solutions in the embodiments of the present invention with reference to the accompanying drawings in the embodiments of the present invention.

Apparently, the embodiments in the following description are merely a part rather than all of the embodiments of the present invention.

It should be noted that, the embodiments of the present invention are preferably applicable to multi-frequency heterogeneous networks, and definitely, are also applicable to co-frequency heterogeneous networks, which is not limited in the present invention. In the following embodiments, a multi-frequency heterogeneous network is taken as an example for description.

In addition, a cell change in the embodiments of the present invention refers to a cell handover or cell reselection performed by a user equipment.

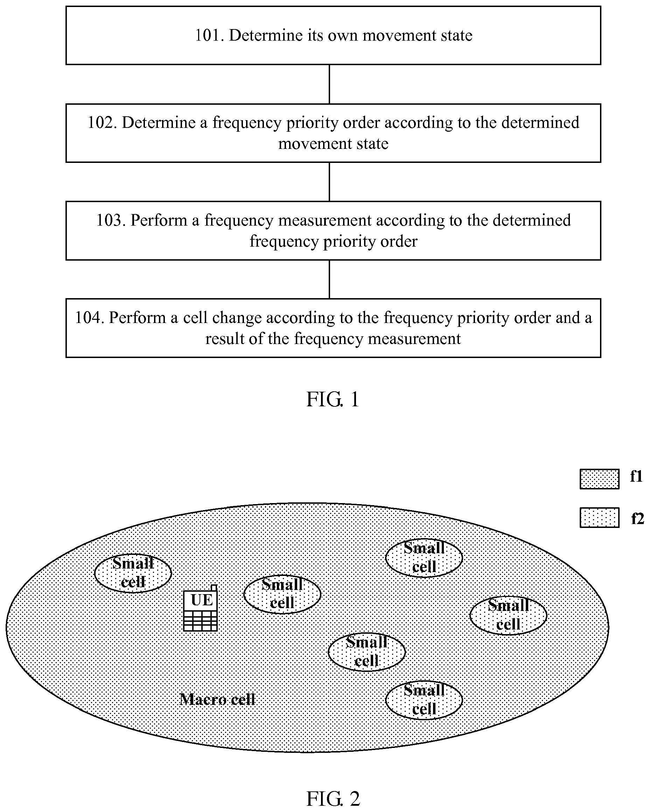

As shown in FIG. 1, an embodiment of the present invention provides a method for cell changing in a heterogeneous network. Based on a user equipment, the method includes the following steps:
101. Determine a movement state of a user equipment.

In the embodiment of the present invention, multiple frequency priority orders are set in a heterogeneous network, each frequency priority order corresponds to one or several movement states of the user equipment, and, before performing a cell change, the user equipment determines a movement state of a user equipment first, and therefore, a frequency priority order used for cell changing is determined according to the movement state of the user equipment, and a frequency priority order used by the user equipment may vary with the movement state of the user equipment.

Optionally, the criteria for determining a movement state of a user equipment may be that:
the user equipment enters a high movement state if the number of cell changes of the user equipment in a specified time t1 is greater than a first threshold n1; and
the user equipment enters a low movement state if the number of cell changes of the user equipment in the specified time t1 is less than a second threshold n2.

Optionally, the criteria for determining a movement state of a user equipment may also be that:
the user equipment enters a high movement state if the number of cell changes of the user equipment in a specified time t1 is greater than a first threshold n1;
the user equipment enters a medium movement state if the number of cell changes of the user equipment in the specified time t1 is less than the first threshold n1 but greater than a second threshold n2; and
the user equipment enters a normal movement state if the user equipment does not meet the criteria of the high movement state or the medium movement state throughout a specified time t2.

Definitely, understandably, the criteria of determining a movement state of a user equipment are not limited, and the user equipment may include other movement states, which are not limited in the present invention.

It should be noted that, in the embodiment of the present invention, the high movement state is termed relative to the low movement state; in the same time period, the number of cell changes of a user equipment in a high movement state is higher than the number of cell changes of a user equipment in a low movement state.

The number of cell changes refers to the total number of cell changes performed by the user equipment in the specified time t1. For example, FIG. 2 is a schematic diagram of a multi-frequency heterogeneous network according to an embodiment of the present invention, where the network includes a macro cell and several small cells, a frequency used by the macro cell is f1, and a frequency used by the small cells is f2. It is assumed that in the time t1, the number of reselections of the macro cell by the user equipment, that is, the number of times that the user equipment reselects the macro cell, is N1, and the number of reselections of a small cell by the user equipment, that is, the number of times that the user equipment reselects the small cell, is N2. In this case, the number of cell changes of the user equipment in t1, that is, the total number of cell reselections, is N1+N2, and the user equipment can determine a movement state of a user equipment according to the value of N1+N2.

Evidently, a true movement state of the user equipment depends not only on the number of cell changes performed by the user equipment in the specified time, but also on a size of a target cell at the time of cell changing. If the user equipment reselects small cells frequently in t1, although the number of reselections is large, the user equipment is not necessarily in the high movement state because the coverage of a small cell is small. Therefore, to improve accuracy in determining the movement state in this step, before step 101, the method for cell changing in an example may further include:
obtaining, by the user equipment, a weight corresponding to each cell in the heterogeneous network, where the weight corresponding to the cell is directly proportional to a size of the cell. For example, if a size of a large cell is tenfold a size of a small cell, a weight corresponding to the large cell is 1 and a weight corresponding to the small cell is 0.1. The value of the weight corresponding to each cell preferably ranges from 0 to 1.

In this case, step 101 may include the following substeps:
First, detect the number of changes of the user equipment to each cell in the heterogeneous network in a specified time.

Then, determine, according to a weight corresponding to each cell and the detected number of changes to each cell, the number of cell changes of the user equipment in the specified time.

Still taking the heterogeneous network shown in FIG. 2 as an example, assume that a weight corresponding to the macro cell is W1 and a weight corresponding to a small cell is W2, and in the time t1, the number of reselections of the macro cell by the user equipment, that is, the number of times that the user equipment reselects the macro cell, is N1, and the number of reselections of a small cell by the user equipment, that is, the number of times that the user equipment reselects the small cell, is N2. In this case, the number of cell changes in t1, that is, the total number of cell reselections, is N1×W1+N2×W2, and the user equipment can determine a movement state of a user equipment according to the value of N1×W1+N2×W2.

Optionally, in this step, the user equipment may determine, according to the weight corresponding to each cell, the detected number of changes to each cell, and a cell type of the target cell, the number of its own cell changes in the specified time, where the cell type of the target cell is defined by the coverage of the cell, for example, the cell type of the target cell is a macro cell or a small cell.

In this case, still taking the heterogeneous network shown in FIG. 2 as an example, assuming that, in a time t, the number of changes of the user equipment to the macro cell is N1, the weight corresponding to the macro cell is W1, the number of changes of the user equipment to the small cells is N2, and the weight corresponding to a small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

Then, the movement state of the user equipment is determined according to the determined number of cell changes.

In the manner of determining the movement state of the user equipment in the above step 101, both the number of cell changes of the user equipment in the specified time and the sizes of the cells are taken into account, and therefore, the movement state of the user equipment can be reflected more accurately, and accuracy of the movement state of the user equipment determined by the user equipment in this step is effectively improved.

Specifically, the user equipment may receive a system message of each cell in the heterogeneous network, where the system message of each cell carries the weight corresponding to the cell, and obtain the weight corresponding to each cell in the heterogeneous network according to the system message of each cell in the heterogeneous network. The user equipment may also receive a dedicated message of each cell in the heterogeneous network, where the dedicated message of each cell carries the weight corresponding to the cell, and obtain the weight corresponding to each cell in the heterogeneous network according to the dedicated message of each cell in the heterogeneous network. Alternatively, the user equipment may pre-store weight information corresponding to each cell in the heterogeneous network, and obtain the weight corresponding to each cell in the heterogeneous network according to the pre-stored weight information. Definitely, the user equipment may also obtain the weight corresponding to each cell in other manners, which is not limited in the present invention.

102. Determine a frequency priority order according to the determined movement state.

In the embodiment of the present invention, each priority order corresponds to a user equipment movement state, where: in a frequency priority order corresponding to a high movement state in which the number of cell changes in a specified time is higher than a first threshold, a priority of a frequency used by a cell with a wide coverage in the heterogeneous network is higher than a priority of a frequency used by a cell with a small coverage; in contrast, in a frequency priority order corresponding to a low movement state in which the number of cell changes in a specified time is lower than a second threshold, a priority of a frequency used by a cell with a wide coverage in the heterogeneous network is lower than a priority of a frequency used by the cell with a small coverage.

Still taking the heterogeneous network shown in FIG. 2 as an example, in the high movement state, a priority of the frequency f1 used by the macro cell is higher than a priority of the frequency f2 used by the small cells; and in the low movement state, the priority of the frequency f1 used by the macro cell is lower than the priority of the frequency f2 used by the small cells.

In this way, when the user equipment is in the high movement state, the user equipment will preferentially change to the macro cell, and therefore, when the user equipment moves frequently, the user equipment will not leave the coverage of the macro cell easily, which effectively reduces the number of cell changes, effectively reduces the power consumption of the user equipment, the network signaling load, and the data transmission delay, and enhances user experience. When the user equipment is in the low movement state, the user equipment will preferentially change to a small cell, which effectively relieves the load of the cell with a wide coverage and effectively enhances performance of the heterogeneous network.

Obviously, before this step, the user equipment needs to obtain the frequency priority order corresponding to each movement state of the user equipment. Specifically, the user equipment may receive a system message delivered by each cell in the heterogeneous network, where the system message carries frequency priority order information corresponding to each movement state; and obtain the frequency priority order corresponding to each movement state according to the system message. The user equipment may also receive a dedicated message delivered by each cell in the heterogeneous network, where the dedicated message carries frequency priority order information corresponding to each movement state; and obtain the frequency priority order corresponding to each movement state according to the dedicated message. In addition, the user equipment may pre-store the frequency priority order information corresponding to each movement state, and the user equipment can obtain the frequency priority order corresponding to each movement state according to the pre-stored frequency priority order information. Definitely, the user equipment may also obtain the frequency priority order corresponding to each movement state of the user equipment in other manners, which is not limited in the present invention.

103. Perform a frequency measurement according to the determined frequency priority order.

Optionally, the user equipment may perform the frequency measurement in the following manners:
if signal strength or signal quality of a current serving cell is greater than a first demarcation, measuring at least one high-priority frequency in the heterogeneous network at intervals of a first specified time; and
if the signal strength or the signal quality of the current serving cell is less than the first demarcation, measuring all frequencies in the heterogeneous network at intervals of the first specified time.

When the user equipment is in a low movement state, such as a static state, the user equipment may stay in gaps between the small cells for long. If the user equipments always measure the small cells preferentially, the user equipments will measure no small cell in a very long time, and these measurements will waste much battery energy of the user equipment.

Therefore, in this step, preferably, the user equipment may perform the frequency measurement according to the frequency priority order determined in step 102 and its own movement state determined in step 101.

Optionally, when the movement state of the user equipment is the high movement state in which the number of cell changes in the specified time exceeds the first threshold, the frequency measurement may be performed in the foregoing manner, that is:
if signal strength or signal quality of a current serving cell is greater than a first demarcation, measuring at least one high-priority frequency in the heterogeneous network at intervals of a first specified time; and
if the signal strength or the signal quality of the current serving cell is less than the first demarcation, measuring all frequencies in the heterogeneous network at intervals of the first specified time.

Optionally, when the movement state of the user equipment is the low movement state in which the number of cell changes in the specified time is lower than the second threshold, the user equipment may perform the frequency measurement in the following manner:
if signal strength or signal quality of a current serving cell is greater than a first demarcation,
measuring at least one high-priority frequency in the heterogeneous network at intervals of a first specified time; and
if no cell is found at the at least one high-priority frequency in a second specified time, measuring the at least one high-priority frequency at intervals of a third specified time; and
after at least one cell is found at the at least one high-priority frequency, measuring the at least one high-priority frequency at intervals of the first specified time,
where, the second specified time is greater than or equal to the first specified time, and the third specified time is greater than the first specified time, for example, the third specified time is fourfold the first specified time.

If no cell is found in the second specified time, it indicates that the user equipment may stay in a gap between the small cells at this time, and probably no cell will be found even if the user equipment performs the frequency measurement continually at intervals of the first specified time. In this case, a measurement time interval is increased from the first specified time to the third specified time, and, when a cell can be searched out, the measurement time interval is increased to the first specified time, which effectively reduces the number of frequency measurements performed by the user equipment, significantly improves the efficiency of the frequency measurement, and effectively saves battery energy of the user equipment.

104. Perform a cell change according to the frequency priority order and a result of the frequency measurement.

In this step, specifically, when performing the cell change, the user equipment selects a scaling factor corresponding to a current movement state of the user equipment according to a movement state of a user equipment, and scales a relevant hysteresis used for cell reselection or handover, so that the cell reselection speed or handover speed of the user equipment matches its movement speed, and then the user equipment performs the cell change according to the frequency priority order, the result of the frequency measurement, and the scaled relevant hysteresis. The relevant hysteresis includes TimeToTrigger, Q_{hyst}, T_{reselectionEUTRA}, T_{reselectionRAT}, or the like.

If the same hysteresis is used regardless of the cell size, the following problem may arise: a hysteresis suitable for a large cell may be too big for a small cell, which results in a late reselection or handover and further leads to service interruption; and, a hysteresis suitable for a small cell may be too small for a large cell, which results in an early reselection or handover and further leads to ping-pong reselection or handover.

To effectively avoid the problem of early or late cell changes of the user equipment in the heterogeneous network, in an example, optionally, the user equipment in the heterogeneous network may use two sets of scaling factors to scale the hysteresis, respectively. The two sets of scaling factors correspond to the size of the target cell and the movement state of the user equipment, respectively. For example,
a first set of scaling factors: macro cell--sf3, small cell--sf4, ...; and
a second set of scaling factors: high movement state--sfl, medium movement state--sf2, ....

The two sets of scaling factors may be sent by the network to the user equipment through a system message or a dedicated message, or pre-stored by the user equipment.

In this case, in this step, the user equipment will determine a first scaling factor among the first set of scaling factors according to the cell size of the target cell for cell changing, and determine a second scaling factor among the second set of scaling factors according to the determined movement state;
then, scale, according to the determined first scaling factor and second scaling factor, a hysteresis used for cell changing; and
then, perform the cell change according to the frequency priority order, the result of the frequency measurement, and the scaled hysteresis.

For example, if the current movement state of the user equipment is the high movement state and the target cell is the macro cell, the scaled hysteresis = an original hysteresis × sf1 × sf3.

In this way, both the problem of the cell size and the movement state of the user equipment are taken into account, and therefore, the scaled hysteresis is more accurate, which effectively avoids the problem of early or late cell changes of the user equipment in the heterogeneous network.

To effectively avoid the problem of early or late cell changes of the user equipment in the heterogeneous network, in another example, the current serving cell of the user equipment determines sizes of possible target cells for a next reselection or handover of the user equipment, determines a hysteresis specific to each target cell according to the sizes of the possible target cells, and sends the hysteresis to the user equipment. The user equipment receives the hysteresis sent by the current serving cell and used for cell changing, and determines a scaling factor according to a movement state of a user equipment, and then scales the received hysteresis according to the determined scaling factor; then, performs cell reselection or handover, that is, performs the cell change, according to the frequency priority order, the result of the frequency measurement, and the scaled hysteresis.

Similarly, in this way, both the problem of the cell size and the movement state of the user equipment are taken into account, and therefore, the scaled hysteresis is more accurate, which effectively avoids the problem of early or late cell changes of the user equipment in the heterogeneous network.

To effectively avoid the problem of early or late cell changes of the user equipment in the heterogeneous network, in another example, the current serving cell of the user equipment broadcasts multiple hystereses in the system message, where each hysteresis corresponds to a cell size. The user equipment receives the multiple hystereses broadcast by the current serving cell. The user equipment determines a size of a possible target cell for a next reselection or handover, and determines a hysteresis corresponding to the possible target cell among the received multiple hystereses according to the size of the possible target cell; and the user equipment determines a scaling factor according to the determined movement state. The determining the scaling factor and the determining the hysteresis of the target cell are not limited to any particular order, and may be performed simultaneously or successively. Then, the user equipment scales the determined hysteresis according to the determined scaling factor.

Similarly, in this way, both the size of the target cell and the movement state of the user equipment are taken into account, and therefore, the scaled hysteresis is more accurate, which effectively avoids the problem of early or late cell changes of the user equipment in the heterogeneous network.

According to the method for cell changing in a heterogeneous network that is provided in the embodiment of the present invention, when performing a cell change, the user equipment selects a frequency priority order according to a movement state of a user equipment; when the user equipment is in a high movement state, the user equipment preferentially changes to a cell with a wide coverage, and therefore, when the user equipment moves frequently, the user equipment will not leave the coverage of the cell easily, which effectively reduces the number of cell changes in the heterogeneous network, effectively reduces the power consumption of the user equipment, the network signaling load, and the data transmission delay, and enhances user experience. When the user equipment is in a low movement state, the user equipment preferentially changes to a cell with a small coverage, which effectively relieves the load of the cell with a wide coverage and effectively enhances performance of the heterogeneous network. Meanwhile, the number of frequency measurements can be reduced effectively, the efficiency of frequency measurement is improved, which further reduces the power consumption of the user equipment, and effectively avoids the problem of early or late cell changes of the user equipment in the heterogeneous network.

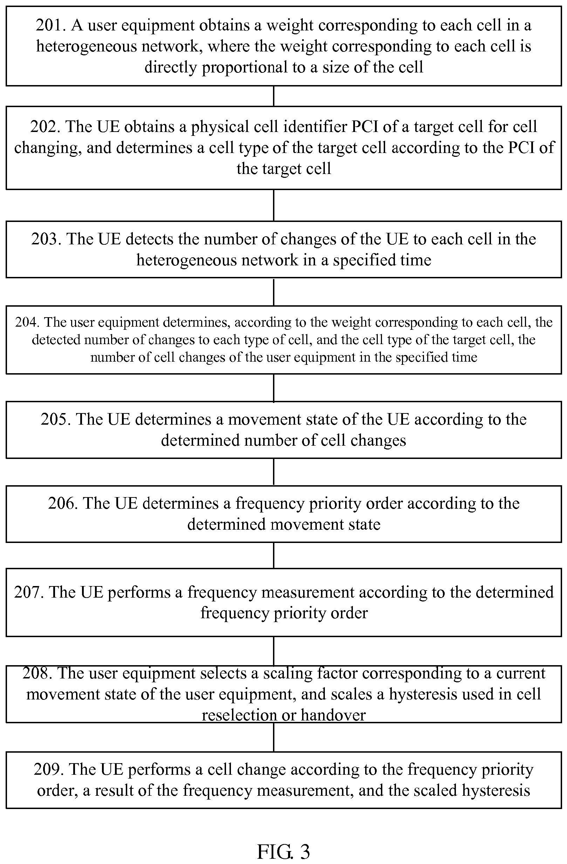

FIG. 3 is an example of a method for cell changing in a heterogeneous network according to further examples. This example includes the following:
201. A user equipment obtains a weight corresponding to each cell in a heterogeneous network, where the weight corresponding to each cell is directly proportional to a size of the cell.
202. Optionally, the user equipment obtains a physical cell identifier PCI (Physical Cell Identity, physical cell identifier) of a target cell for cell changing, and determines a cell type of the target cell according to the PCI of the target cell.

Before this step, the user equipment needs to obtain a mapping relationship between cell types and physical cell identifiers. In this embodiment, optionally, each cell broadcasts one or more PCI (Physical Cell Identity, physical cell identifier) intervals in a system message. Each PCI interval corresponds to a cell type, and a cell type indicates a size of a cell. For example, a PCI interval of a small cell is [PCI1, PCI2], and a PCI interval of a macro cell is [PCI3, PCI4]. Through the system message, the user equipment can obtain the PCI intervals and the cell types corresponding to the PCI intervals, that is, obtain the mapping relationship between the cell types and the physical cell identifiers, thereby determining the cell type of the target cell according to the mapping relationship and the PCI of the target cell. For example, if the PCI of the target cell is in a PCI interval of a small cell, the target cell is a small cell; and, if the PCI of the target cell is in a PCI interval of a macro cell, the target cell is a macro cell.

Definitely, each cell may also send the PCI intervals and the cell types corresponding to the PCI intervals to the user equipment through a dedicated message, and the PCI intervals and the cell types corresponding to the PCI intervals may also be preset in the user equipment, which is not limited in this example.

203. The user equipment detects the number of changes of the user equipment to each cell in the heterogeneous network in a specified time.

It should be noted that, steps 203, 202, and 201 are not limited to any particular order, and may be performed concurrently or successively.

204. The user equipment determines, according to the weight corresponding to each cell, the detected number of changes to each type of cell, and the cell type of the target cell, the number of cell changes of the user equipment in the specified time.

For example, assuming that, in a time t, the number of changes of the user equipment to the macro cell is N1, a weight corresponding to the macro cell is W1, the number of changes of the user equipment to the small cells is N2, and a weight corresponding to the small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

205. The user equipment determines a movement state of a user equipment according to the determined number of cell changes.

206. The user equipment determines a frequency priority order according to the determined movement state.

Specifically, when the user equipment is in a high movement state, a priority of a frequency used by the macro cell is higher than a priority of a frequency used by the small cells; otherwise, a priority of a frequency used by the macro cell is lower than a priority of a frequency used by the small cells.

207. The user equipment performs a frequency measurement according to the determined frequency priority order.

208. The user equipment selects a scaling factor corresponding to a current movement state of the user equipment, and scales a hysteresis used in cell reselection or handover.

209. The user equipment performs a cell change according to the frequency priority order, a result of the frequency measurement, and the scaled hysteresis.

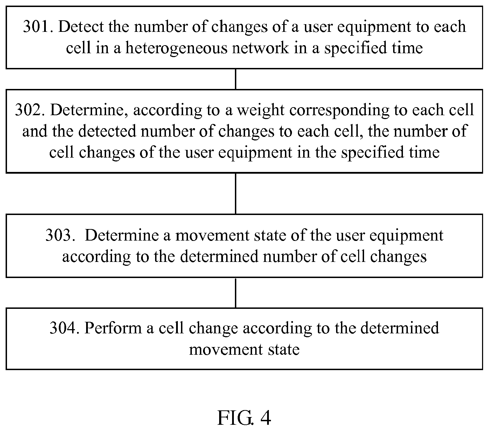

As shown in FIG. 4, an exampleprovides another method for cell changing in a heterogeneous network. Based on a user equipment, the method includes the following steps:
301. Detect the number of changes of a user equipment to each cell in a heterogeneous network in a specified time.

The number of changes of the user equipment to each cell in the specified time is the number of times that the user equipment changes to the cell in the specified time.

302. Determine, according to a weight corresponding to each cell and the detected number of changes to each cell, the number of cell changes of the user equipment in the specified time.

The weight corresponding to each cell is directly proportional to a size of the cell. For example, if a size of a large cell is tenfold a size of a small cell, a weight corresponding to the large cell is 1 and a weight corresponding to the small cell is 0.1. The value of the weight corresponding to each cell preferably ranges from 0 to 1.

Taking the heterogeneous network shown in FIG. 2 as an example, assume that a weight corresponding to the macro cell is W1 and a weight corresponding to a small cell is W2, and in a time t1, the number of reselections of the macro cell by the user equipment, that is, the number of times that the user equipment reselects the macro cell, is N1, and the number of reselections of a small cell by the user equipment, that is, the number of times that the user equipment reselects the small cell, is N2. In this case, the number of cell changes in t1, that is, the total number of cell reselections, is N1×W1+N2×W2, and the user equipment can determine a movement state of a user equipment according to the value of N1×W1+N2×W2.

Optionally, in this step, the user equipment may determine, according to the weight corresponding to each cell, the detected number of changes to each cell, and a cell type of a target cell, the number of its own cell changes in the specified time, where the cell type of the target cell is defined by the coverage of the cell, for example, the cell type of the target cell is a macro cell or a small cell.

In this case, still taking the heterogeneous network shown in FIG. 2 as an example, assuming that, in a time t, the number of changes of the user equipment to the macro cell is N1, the weight corresponding to the macro cell is W1, the number of changes of the user equipment to the small cells is N2, and the weight corresponding to a small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

Understandably, before this step, the user equipment needs to obtain the weight corresponding to each cell in the heterogeneous network. Specifically, the user equipment may receive a system message of each cell in the heterogeneous network, where the system message of each cell carries the weight corresponding to the cell, and obtain the weight corresponding to each cell in the heterogeneous network according to the system message of each cell in the heterogeneous network. The user equipment may also receive a dedicated message of each cell in the heterogeneous network, where the dedicated message of each cell carries the weight corresponding to the cell, and obtain the weight corresponding to each cell in the heterogeneous network according to the dedicated message of each cell in the heterogeneous network. In addition, the user equipment may pre-store weight information corresponding to each cell in the heterogeneous network, and obtain the weight corresponding to each cell in the heterogeneous network according to the pre-stored weight information. Definitely, the user equipment may also obtain the weight corresponding to each cell in other manners, which is not limited in the present invention.

Such a method for determining the number of cell changes takes both the number of cell changes in the specified time and the sizes of the cells into account, and therefore, a true movement state of the user equipment can be determined accurately.

303. Determine a movement state of the user equipment according to the determined number of cell changes.

Optionally, movement states of the user equipment include:
a high movement state in which the number of cell changes in a specified time t1 is greater than a first threshold n1, and a low movement state in which the number of cell changes in a specified time t1 is less than a second threshold n2, and other movement states, which is not limited in the present invention.

304. Perform a cell change according to the determined movement state.

In this step, specifically, when performing the cell change, the user equipment selects a scaling factor corresponding to a current movement state of the user equipment according to a movement state of a user equipment, and scales a relevant hysteresis used for cell reselection or handover, so that the cell reselection speed or handover speed of the user equipment matches its movement speed, and then the user equipment performs the cell change according to the scaled relevant hysteresis. The relevant hysteresis includes TimeToTrigger, Q_{hyst}, T_{reselectionEUTRA}, T_{reselectionRAT}, or the like. In steps 302 and 303, the movement state of the user equipment is determined accurately according to the weight corresponding to each cell and the number of changes of the user equipment to each cell, and therefore, in this step, an accurate scaling factor can be selected according to the determined movement state, so that service interruption caused by an early or late cell change is effectively avoided.

According to the method for cell changing in a heterogeneous network that is provided in the embodiment, the movement state of the user equipment is determined according to the weight corresponding to each cell and the number of changes of the user equipment to each cell, and therefore, in determining the movement state of the user equipment, both the number of cell changes of the user equipment and the size of the target cell are taken into account. In this way, a true movement state of the user equipment can be reflected more accurately, so that service interruption caused by an early or late cell change is effectively avoided when the cell change is performed according to the movement state of the user equipment.

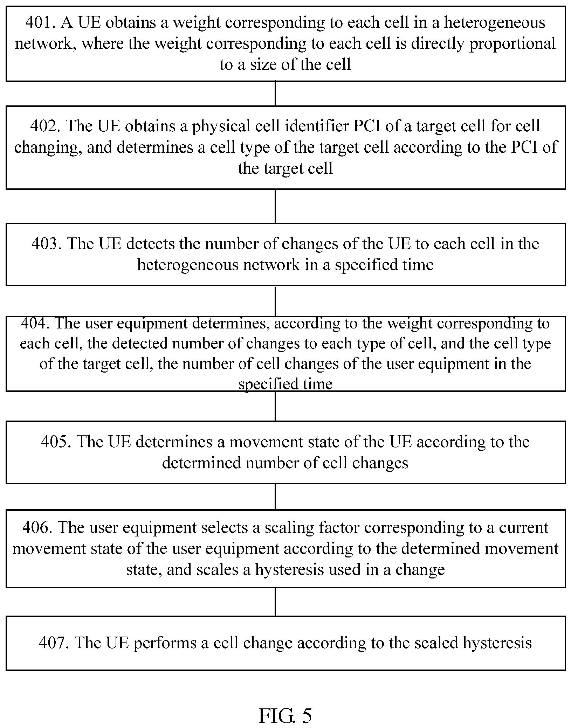

FIG. 5 is a specific example of a method for cell changing in a heterogeneous network according to further examples. This example includes the following:
401. A user equipment obtains a weight corresponding to each cell in a heterogeneous network, where the weight corresponding to each cell is directly proportional to a size of the cell.
402. Optionally, the user equipment obtains a physical cell identifier PCI of a target cell for cell changing, and determines a cell type of the target cell according to the PCI of the target cell.

Before this step, the user equipment needs to obtain a mapping relationship between cell types and physical cell identifiers. In this example, optionally, each cell broadcasts one or more PCI intervals in a system message. Each PCI interval corresponds to a cell type, and a cell type indicates a size of a cell. For example, a PCI interval of a small cell is [PCI1, PCI2], and a PCI interval of a macro cell is [PCI3, PCI4]. Through the system message, the user equipment can obtain the PCI intervals and the cell types corresponding to the PCI intervals, that is, obtain the mapping relationship between the cell types and the physical cell identifiers, thereby determining the cell type of the target cell according to the mapping relationship and the PCI of the target cell. For example, if the PCI of the target cell is in a PCI interval of a small cell, the target cell is a small cell; and, if the PCI of the target cell is in a PCI interval of a macro cell, the target cell is a macro cell.

Definitely, each cell may also send the PCI intervals and the cell types corresponding to the PCI intervals to the user equipment through a dedicated message, and the PCI intervals and the cell types corresponding to the PCI intervals may also be preset in the user equipment, which is not limited in this embodiment.

403. The user equipment detects the number of changes of the user equipment to each cell in the heterogeneous network in a specified time.

It should be noted that, steps 403, 402, and 401 are not limited to any particular order, and may be performed concurrently or successively.

404. The user equipment determines, according to the weight corresponding to each cell, the detected number of changes to each type of cell, and the cell type of the target cell, the number of cell changes of the user equipment in the specified time.

For example, assuming that, in a time t, the number of changes of the user equipment to the macro cell is N1, a weight corresponding to the macro cell is W1, the number of changes of the user equipment to the small cells is N2, and a weight corresponding to the small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

405. The user equipment determines a movement state of a user equipment according to the determined number of cell changes.

406. The user equipment selects a scaling factor corresponding to a current movement state of the user equipment according to the determined movement state, and scales a hysteresis used for cell changing.

407. The user equipment performs a cell change according to the scaled hysteresis.

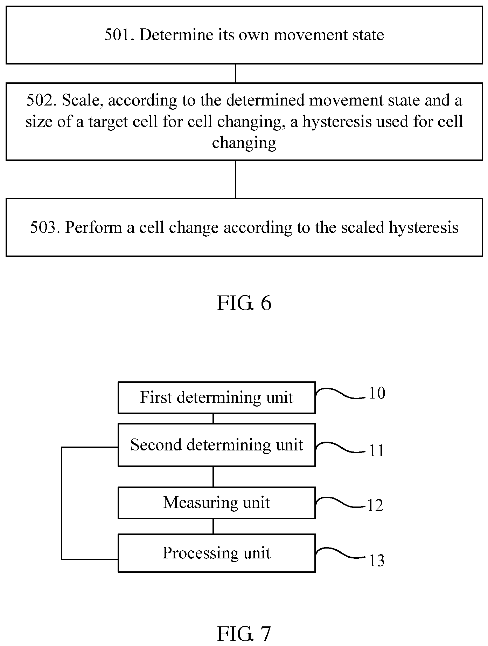

As shown in FIG. 6, an exampleprovides another method for cell changing in a heterogeneous network. Based on a user equipment, the method includes the following steps:
501. Determine a movement state of the user equipment.

Specifically, in this step, the method for determining the movement state of the user equipment in the preceding examplemay be adopted, or a method for determining the movement state of the user equipment in the prior art may be adopted, which is not limited in the present invention.

502. Scale, according to the determined movement state and a size of a target cell for cell changing, a hysteresis used for cell changing.

When performing a cell change, the user equipment selects a scaling factor corresponding to a current movement state of the user equipment according to a movement state of a user equipment, and scales a relevant hysteresis used for cell reselection or handover, so that the cell reselection speed or handover speed of the user equipment matches its movement speed, and then the user equipment performs the cell change according to the scaled relevant hysteresis. The relevant hysteresis includes TimeToTrigger, Q_{hyst}, T_{reselectionEUTRA}, T_{reselectionRAT}, or the like.

If the same hysteresis is used regardless of the size of the target cell for cell changing, the following problem may arise: a hysteresis suitable for a large cell may be too big for a small cell, which results in a late reselection or handover and further leads to service interruption; and, a hysteresis suitable for a small cell may be too small for a large cell, which results in an early reselection or handover and further leads to ping-pong reselection or handover.

Therefore, to effectively avoid the problem of early or late cell changes of the user equipment in the heterogeneous network, in this step, the user equipment scales, according to the determined movement state and the size of the target cell for cell changing, the hysteresis used for cell changing.

Optionally, in an example, the user equipment may use two sets of scaling factors to scale the hysteresis, respectively. The two sets of scaling factors correspond to the size of the target cell and the movement state of the user equipment, respectively. For example,
a first set of scaling factors: macro cell--sf3, small cell--sf4, ...; and
a second set of scaling factors: high movement state--sfl, medium movement state--sf2, ....

The two sets of scaling factors may be sent by the network to the user equipment through a system message or a dedicated message, or pre-stored by the user equipment.

In this case, in this step, the user equipment will determine a first scaling factor among the first set of scaling factors according to the size of the target cell for cell changing, and determine a second scaling factor among the second set of scaling factors according to the determined movement state. The determining the first scaling factor and the determining the second scaling factor by the user equipment are not limited to any particular order, and may be performed simultaneously or successively. Then, the user equipment scales, according to the determined first scaling factor and second scaling factor, the hysteresis used for cell changing.

For example, if the current movement state of the user equipment is the high movement state and the target cell is the macro cell, the scaled hysteresis = an original hysteresis × sf1 × sf3.

In this way, both the size of the target cell and the movement state of the user equipment are taken into account, and therefore, the scaled hysteresis is more accurate, which effectively avoids the problem of early or late cell changes of the user equipment in the heterogeneous network.

Optionally, in another example, a current serving cell of the user equipment determines sizes of possible target cells for a next reselection or handover of the user equipment, determines a hysteresis specific to each target cell according to the sizes of the possible target cells, and sends the hysteresis to the user equipment. That is to say, the user equipment receives the hysteresis sent by the current serving cell and used for cell changing, where the hysteresis is obtained by the serving cell according to the size of the target cell used for cell changing, and the user equipment determines a scaling factor according to the determined movement state. The determining the scaling factor and the receiving the hysteresis of the current serving cell are not limited to any particular order, and may be performed simultaneously or successively. Then, the user equipment scales the received hysteresis according to the determined scaling factor.

Similarly, in this way, both the size of the target cell and the movement state of the user equipment are taken into account, and therefore, the scaled hysteresis is more accurate, which effectively avoids the problem of early or late cell changes of the user equipment in the heterogeneous network.

Optionally, in another example, the current serving cell of the user equipment broadcasts multiple hystereses in the system message, where each hysteresis corresponds to a cell size. The user equipment receives the multiple hystereses broadcast by the current serving cell. The user equipment determines a size of a possible target cell for a next reselection or handover, and determines a hysteresis corresponding to the possible target cell among the received multiple hystereses according to the size of the possible target cell; and the user equipment determines a scaling factor according to the determined movement state. The determining the scaling factor and the determining the hysteresis of the target cell are not limited to any particular order, and may be performed simultaneously or successively. Then, the user equipment scales the determined hysteresis according to the determined scaling factor.

Similarly, in this way, both the size of the target cell and the movement state of the user equipment are taken into account, and therefore, the scaled hysteresis is more accurate, which effectively avoids the problem of early or late cell changes of the user equipment in the heterogeneous network.

503. Perform a cell change according to the scaled hysteresis.

According to the method for cell changing in a heterogeneous network that is provided in the example, the hysteresis used for cell changing is scaled according to the movement state of the user equipment and the size of the target cell for cell changing. Therefore, the scaled hysteresis can be adapted to the movement state of the user equipment and the size of the target cell, so that service interruption caused by an early or late cell change is effectively avoided when the user equipment performs the cell change.

Corresponding to the method, an embodiment of the present invention further provides a user equipment. As shown in FIG. 7, the user equipment includes:
a first determining unit 10, configured to determine a movement state of the user equipment;
a second determining unit 11, configured to determine a frequency priority order according to the movement state determined by the first determining unit 10, where: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
a measuring unit 12, configured to perform a frequency measurement according to the frequency priority order determined by the second determining unit 11; and
a processing unit 13, configured to perform a cell change according to the frequency priority order determined by the second determining unit 11 and a result of the frequency measurement performed by the measuring unit 12.

When performing a cell change, the user equipment provided in the embodiment of the present invention selects a frequency priority order according to a movement state of a user equipment; when the user equipment is in a high movement state, the user equipment preferentially changes to a cell with a wide coverage, and therefore, when the user equipment moves frequently, the user equipment will not leave the coverage of the cell easily, which effectively reduces the number of cell changes in the heterogeneous network, effectively reduces the power consumption of the user equipment, the network signaling load, and the data transmission delay, and enhances user experience. When the user equipment is in a low movement state, the user equipment preferentially changes to a cell with a small coverage, which effectively relieves the load of the cell with a wide coverage and enhances performance of the heterogeneous network.

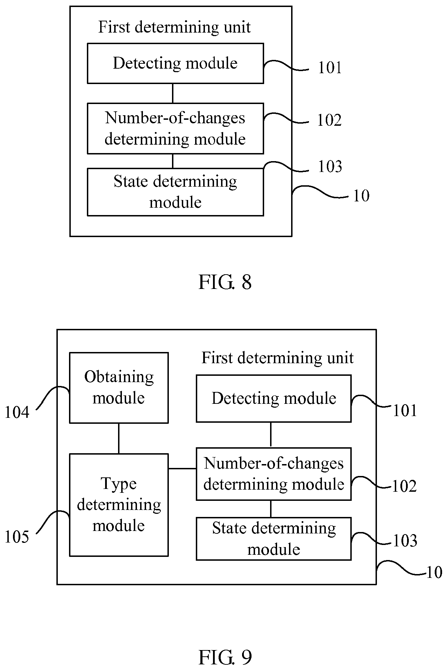

Further, to ensure accuracy of the movement state determined by the first determining unit 10, in an example, as shown in FIG. 8, the first determining unit 10 includes:
a detecting module 101, configured to detect the number of changes of the user equipment to each cell in the heterogeneous network in a specified time;
a number-of-changes determining module 102, configured to determine, according to a weight corresponding to each cell and the number of changes to each cell, which is detected by the detecting module 101, the number of cell changes of the user equipment in the specified time, where the weight corresponding to each cell is directly proportional to a size of the cell; and
a state determining module 103, configured to determine the movement state of the user equipment according to the number of cell changes, which is determined by the number-of-changes determining module 102.

Optionally, the number-of-changes determining module 102 may be specifically configured to determine, according to the weight corresponding to each cell, the number of changes to each cell, which is detected by the detecting module, and a cell type of a target cell, the number of cell changes of the user equipment in the specified time.

Further, to ensure accuracy of the movement state determined by the first determining unit 10, in another exampleof the present invention, as shown in FIG. 9, the first determining unit 10 further includes:
an obtaining module 104, configured to obtain a physical cell identifier of the target cell for cell changing; and
a type determining module 105, configured to determine the cell type of the target cell according to the physical cell identifier of the target cell which is obtained by the obtaining module 104.

In this case, the number-of-changes determining module 102 is specifically configured to:
determine, according to the weight corresponding to each cell, the number of changes to each cell, which is detected by the detecting module 101, and the cell type of the target cell, which is determined by the type determining module 105, the number of cell changes of the user equipment in the specified time.

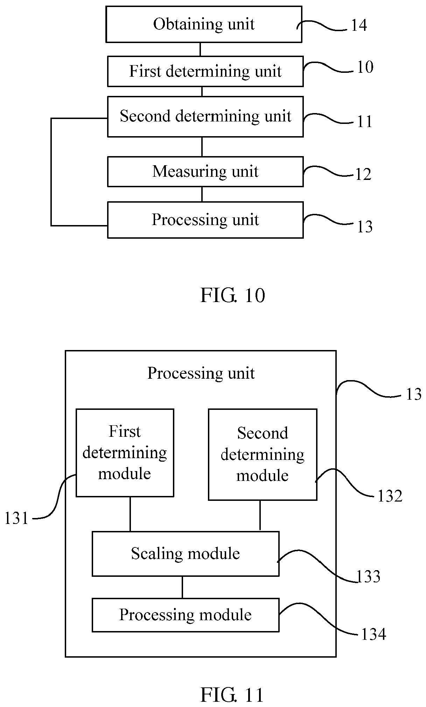

Further, as shown in FIG. 10, the user equipment further includes an obtaining unit 14, configured to: before the first determining unit 10 determines the movement state of the user equipment, obtain the weight corresponding to each cell in the heterogeneous network.

Optionally, the obtaining unit 14 may be specifically configured to receive a system message of each cell in the heterogeneous network, where the system message of each cell carries the weight corresponding to the cell; and obtain the weight corresponding to each cell in the heterogeneous network according to the system message of each cell in the heterogeneous network.

Optionally, the obtaining unit 14 may be specifically configured to receive a dedicated message of each cell in the heterogeneous network, where the dedicated message of each cell carries the weight corresponding to the cell; and obtain the weight corresponding to each cell in the heterogeneous network according to the dedicated message of each cell in the heterogeneous network.

Optionally, the obtaining unit 14 may be specifically configured to obtain the weight corresponding to each cell in the heterogeneous network according to pre-stored weight information.

Further, in an example, the obtaining unit 14 is configured to obtain a frequency priority order corresponding to each movement state, and the second determining unit 11 determines the frequency priority order according to the movement state determined by the first determining unit 10 and the frequency priority order corresponding to each movement state, which is obtained by the obtaining unit 14.

Optionally, the obtaining unit 14 may be specifically configured to receive a system message, where the system message carries frequency priority order information corresponding to each movement state; and obtain the frequency priority order corresponding to each movement state according to the system message.

Optionally, the obtaining unit 14 may be specifically configured to receive a dedicated message, where the dedicated message carries frequency priority order information corresponding to each movement state; and obtain the frequency priority order corresponding to each movement state according to the dedicated message.

Optionally, the obtaining unit 14 may be specifically configured to obtain the frequency priority order corresponding to each movement state according to pre-stored frequency priority order information.

Preferably, to reduce the number of frequency measurements, improve the efficiency of frequency measurements, and reduce power consumption of the user equipment effectively, the measuring unit 12 may be specifically configured to perform the frequency measurement according to the frequency priority order determined by the second determining unit 11 and the movement state of the user equipment, which is determined by the first determining unit 12.

Optionally, the measuring unit 12 may be specifically configured to:
when the movement state is the high movement state in which the number of cell changes in the specified time exceeds the first threshold,
if signal strength or signal quality of a current serving cell is greater than a first demarcation, measure at least one high-priority frequency in the heterogeneous network at intervals of a first specified time; and
if the signal strength or the signal quality of the current serving cell is less than the first demarcation, measure all frequencies in the heterogeneous network at intervals of the first specified time.

Optionally, the measuring unit 12 may be specifically configured to:
when the movement state is the low movement state in which the number of cell changes in the specified time is lower than the second threshold,
if signal strength or signal quality of a current serving cell is greater than a first demarcation,
measure at least one high-priority frequency in the heterogeneous network at intervals of a first specified time; and
if no cell is found at the at least one high-priority frequency in a second specified time, measure the at least one high-priority frequency at intervals of a third specified time, where the third specified time is greater than the first specified time;
measure the at least one high-priority frequency at intervals of the first specified time after at least one cell is found at the at least one high-priority frequency; and
if the signal strength or the signal quality of the current serving cell is less than the first demarcation, measure all frequencies in the heterogeneous network at intervals of the first specified time.

Further, to effectively avoid the problem of early or late cell changes of the user equipment in the heterogeneous network, in an embodiment of the present invention, as shown in FIG. 11, the processing unit 13 includes:
a first determining module 131, configured to determine a first scaling factor according to a cell size of the target cell for cell changing;
a second determining module 132, configured to determine a second scaling factor according to the determined movement state;
a scaling module 133, configured to scale, according to the determined first scaling factor and second scaling factor, a hysteresis used for cell changing; and
a processing module 134, configured to perform the cell change according to the frequency priority order, the result of the frequency measurement, and the scaled hysteresis.

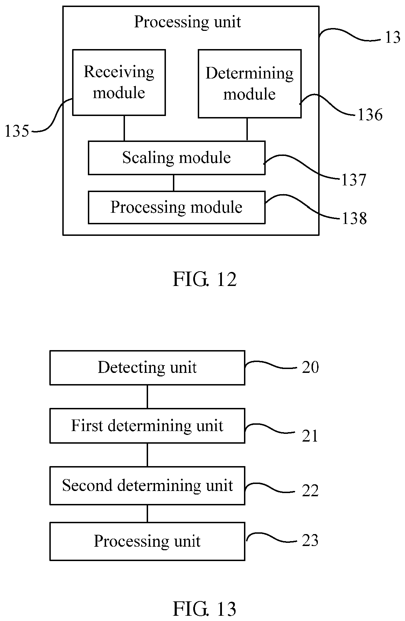

Further, to effectively avoid the problem of early or late cell changes of the user equipment in the heterogeneous network, in an embodiment of the present invention, as shown in FIG. 12, the processing unit 13 includes:
a receiving module 135, configured to receive a hysteresis used for cell changing from a current serving cell, where the hysteresis is obtained by the serving cell according to a size of the target cell for cell changing;
a determining module 136, configured to determine a scaling factor according to the determined movement state;
a scaling module 137, configured to scale the received hysteresis according to the determined scaling factor; and
a processing module 138, configured to perform the cell change according to the frequency priority order, the result of the frequency measurement, and the scaled hysteresis.

Corresponding to the method, an examplefurther provides a user equipment. As shown in FIG. 13, the user equipment includes:
a detecting unit 20, configured to detect the number of changes of the user equipment to each cell in the heterogeneous network in a specified time;
a first determining unit 21, configured to determine, according to a weight corresponding to each cell and the number of changes to each cell, which is detected by the detecting unit 20, the number of cell changes of the user equipment in the specified time, where the weight corresponding to each cell is directly proportional to a size of the cell;
a second determining unit 22, configured to determine a movement state of the user equipment according to the determined number of cell changes; and
a processing unit 23, configured to perform a cell change according to the determined movement state.

The user equipment provided in the exampledetermines the movement state of the user equipment according to the weight corresponding to each cell and the number of changes of the user equipment to each cell, and therefore, in determining the movement state of the user equipment, both the number of cell changes of the user equipment and the size of the target cell are taken into account. In this way, a true movement state of the user equipment can be reflected more accurately, so that service interruption caused by an early or late cell change is effectively avoided when the cell change is performed according to the movement state of the user equipment.

Optionally, the first determining unit 21 may be specifically configured to determine, according to the weight corresponding to each cell, the detected number of changes to each cell, and a cell type of a target cell, the number of cell changes of the user equipment in the specified time.

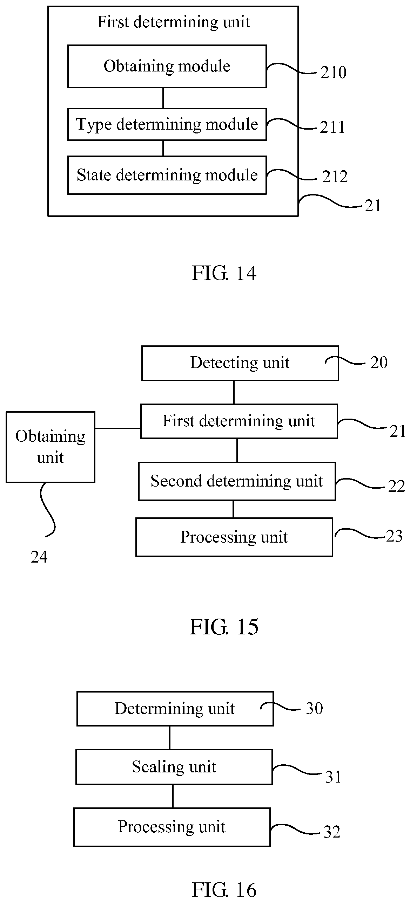

In an example, as shown in FIG. 14, the first determining unit 21 specifically includes:
an obtaining module 210, configured to obtain a physical cell identifier of the target cell for cell changing;
a type determining module 211, configured to determine the cell type of the target cell according to the physical cell identifier of the target cell; and
a number-of-changes determining module 212, configured to determine, according to the weight corresponding to each cell, the number of changes to each cell, which is detected by the detecting unit 20, and the cell type of the target cell, which is determined by the type determining module 211, the number of cell changes of the user equipment in the specified time.

Further, in an example, as shown in FIG. 15, the user equipment further includes an obtaining unit 24, configured to obtain the weight corresponding to each cell in the heterogeneous network.

Optionally, the obtaining unit 24 may be specifically configured to receive a system message of each cell in the heterogeneous network, where the system message of each cell carries the weight corresponding to the cell; and obtain the weight corresponding to each cell in the heterogeneous network according to the system message of each cell in the heterogeneous network.

Optionally, the obtaining unit 24 may be specifically configured to receive a dedicated message of each cell in the heterogeneous network, where the dedicated message of each cell carries the weight corresponding to the cell; and obtain the weight corresponding to each cell in the heterogeneous network according to the dedicated message of each cell in the heterogeneous network.

Optionally, the obtaining unit 24 may be specifically configured to obtain the weight corresponding to each cell in the heterogeneous network according to pre-stored weight information.

Corresponding to the method, an example provides a user equipment. As shown in FIG. 16, the user equipment includes:
a determining unit 30, configured to determine a movement state of the user equipment;
a scaling unit 31, configured to scale, according to the movement state determined by the determining unit 30 and a size of a target cell for cell changing, a hysteresis used for cell changing; and
a processing unit 32, configured to perform a cell change according to the hysteresis scaled by the scaling unit 31.

According to the user equipment provided in the example, the hysteresis used for cell changing is scaled according to the movement state of the user equipment and the size of the target cell for cell changing. Therefore, the scaled hysteresis can be adapted to the movement state of the user equipment and the size of the target cell, so that service interruption caused by an early or late cell change is effectively avoided when the user equipment performs the cell change.

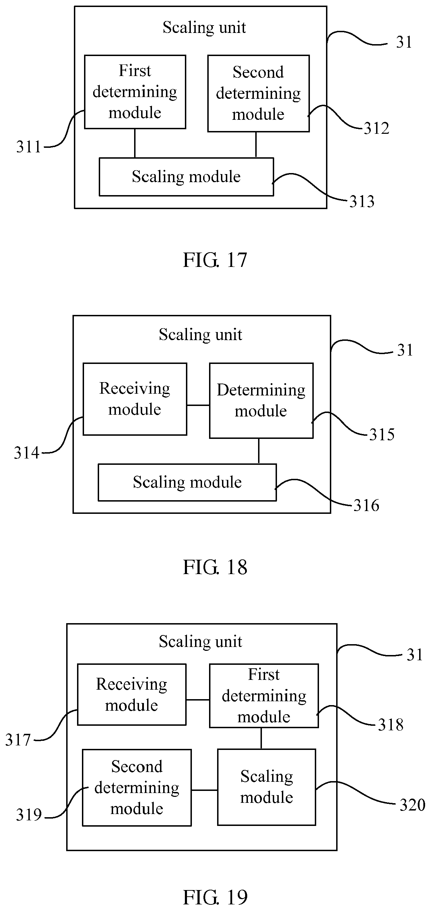

Optionally, in an example, as shown in FIG. 17, the scaling unit 31 specifically includes:
a first determining module 311, configured to determine a first scaling factor according to the size of the target cell for cell changing;
a second determining module 312, configured to determine a second scaling factor according to the movement state determined by the determining unit 30;
a scaling module 313, configured to scale, according to the first scaling factor determined by the first determining module 311 and the second scaling factor determined by the second determining module 312, the hysteresis used for cell changing.

Optionally, in an example, as shown in FIG. 18, the scaling unit 31 specifically includes:
a receiving module 314, configured to receive a hysteresis used for cell changing from a current serving cell, where the hysteresis is obtained by the serving cell according to the size of the target cell for cell changing;
a determining module 315, configured to determine a scaling factor according to the movement state determined by the determining unit 30; and
a scaling module 316, configured to scale, according to the scaling factor determined by the determining module 315, the hysteresis received by the receiving module.

Optionally, in an example, as shown in FIG. 19, the scaling unit 31 specifically includes:
a receiving module 317, configured to receive at least one hysteresis sent by a current serving cell, where each hysteresis corresponds to a cell size;
a first determining module 318, configured to determine, according to the size of the target cell for cell changing, a hysteresis corresponding to the target cell in the hystereses received by the receiving module 317;
a second determining module 319, configured to determine a scaling factor according to the movement state determined by the determining unit 30; and
a scaling module 320, configured to scale, according to the scaling factor determined by the second determining module 319, the hysteresis determined by the first determining module 318.

A person of ordinary skill in the art should understand that, all or a part of the processes of the foregoing method embodiments may be implemented by a computer program instructing relevant hardware. The program may be stored in a computer readable storage medium. When the program runs, the steps of the foregoing method embodiments are performed. The storage medium includes any medium that is capable of storing program codes, such as a ROM, a RAM, a magnetic disk, an optical disk, or the like.

The foregoing descriptions are merely specific embodiments of the present invention, but are not intended to limit the protection scope of the present invention. Any variation or replacement readily figured out by a person skilled in the art within the technical scope of the claims shall fall within the protection scope of the present invention. Therefore, the protection scope of the present invention shall be subject to the protection scope of the claims.

## Claims

1. A method for cell changing of a user equipment in a heterogeneous network, comprising:
determining (101), by the user equipment, a movement state of the user equipment;
determining (102), by the user equipment, a frequency priority order according to the determined movement state, wherein: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
performing (103), by the user equipment, a frequency measurement according to the determined frequency priority order and the determined movement state; and
performing (104), by the user equipment, a cell change according to the determined frequency priority order and a result of the frequency measurement,
wherein the performing (103) the frequency measurement according to the determined frequency priority order and the determined movement state comprises:
when the movement state is the high movement state in which the number of cell changes in the specified time exceeds the first threshold,
if signal strength or signal quality of a current serving cell is greater than a first demarcation, measuring at least one high-priority frequency in the heterogeneous network at intervals of a first specified time; and
if the signal strength or the signal quality of the current serving cell is less than the first demarcation, measuring all frequencies in the heterogeneous network at intervals of the first specified time;
and
when the movement state is the low movement state in which the number of cell changes in the specified time is lower than the second threshold,
if signal strength or signal quality of a current serving cell is greater than a first demarcation,
measuring at least one high-priority frequency in the heterogeneous network at intervals of a first specified time;
if no cell is found at the at least one high-priority frequency in a second specified time, measuring the at least one high-priority frequency at intervals of a third specified time, wherein the third specified time is greater than the first specified time;
after at least one cell is found at the at least one high-priority frequency, measuring the at least one high-priority frequency at intervals of the first specified time; and
if the signal strength or the signal quality of the current serving cell is less than the first demarcation, measuring all frequencies in the heterogeneous network at intervals of the first specified time, and
wherein performing (104) the cell change, comprises: selecting, by the user equipment, a scaling factor corresponding to the current movement state of the user equipment according to a movement state of a user equipment, and scaling a relevant hysteresis used for cell reselection or handover, and then performing, by the user equipment, the cell change according to the frequency priority order, the result of the frequency measurement and the scaled relevant hysteresis,
wherein the user equipment in the heterogeneous network uses two sets of scaling factors to scale the hysteresis, respectively, and the two sets of scaling factors correspond to the size of a target cell and the movement state of the user equipment, respectively, and
wherein a first scaling factor among the first set of scaling factors is determined according to the size of the target cell for cell changing, and a second scaling factor among the second set of scaling factors is determined according to the movement state.

2. The method according to claim 1, wherein:
before the determining (102) a frequency priority order according to the determined movement state, the method further comprises:
obtaining a frequency priority order corresponding to each movement state.

3. The method according to claim 2, wherein:
the obtaining a frequency priority order corresponding to each movement state comprises:
receiving a system message, wherein the system message carries frequency priority order information corresponding to each movement state; and
obtaining the frequency priority order corresponding to each movement state according to the system message;
or
receiving a dedicated message, wherein the dedicated message carries frequency priority order information corresponding to each movement state; and
obtaining the frequency priority order corresponding to each movement state according to the dedicated message;
or
obtaining the frequency priority order corresponding to each movement state according to pre-stored frequency priority order information.

4. A user equipment, comprising:
a first determining unit (10), configured to determine a movement state of the user equipment;
a second determining unit (11), configured to determine a frequency priority order according to the movement state determined by the first determining unit (10), wherein: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
a measuring unit (12), configured to perform a frequency measurement according to the frequency priority order determined by the second determining unit (11) and the determined movement state determined by the first determining unit (10); and
a processing unit (13), configured to perform a cell change according to the frequency priority order determined by the second determining unit (11) and a result of the frequency measurement performed by the measuring unit (12),
wherein the measuring unit (12) is specifically configured to:
when the movement state is the high movement state in which the number of cell changes in the specified time exceeds the first threshold,
if signal strength or signal quality of a current serving cell is greater than a first demarcation, measure at least one high-priority frequency in the heterogeneous network at intervals of a first specified time; and
if the signal strength or the signal quality of the current serving cell is less than the first demarcation, measure all frequencies in the heterogeneous network at intervals of the first specified time;
and
when the movement state is the low movement state in which the number of cell changes in the specified time is lower than the second threshold,
if signal strength or signal quality of a current serving cell is greater than a first demarcation,
measure at least one high-priority frequency in the heterogeneous network at intervals of a first specified time; and
if no cell is found at the at least one high-priority frequency in a second specified time, measure the at least one high-priority frequency at intervals of a third specified time, wherein the third specified time is greater than the first specified time;
measure the at least one high-priority frequency at intervals of the first specified time after at least one cell is found at the at least one high-priority frequency; and
if the signal strength or the signal quality of the current serving cell is less than the first demarcation, measure all frequencies in the heterogeneous network at intervals of the first specified time, and
wherein the processing unit (13) includes:
a receiving module (135) configured to receive a hysteresis used for cell changing from a current serving cell, where the hysteresis is obtained by the serving cell according to a size of a target cell for cell changing;
a determining module (136) configured to determine a scaling factor according to the determined movement state;
a scaling module (137) configured to scale the received hysteresis according to the determined scaling factor; and
a processing module (138) configured to perform the cell change according to the frequency priority order, the result of the frequency measurement and the scaled hysteresis,
wherein the user equipment in the heterogeneous network uses two sets of scaling factors to scale the hysteresis, respectively, and the two sets of scaling factors correspond to the size of the target cell and the movement state of the user equipment, respectively and
wherein a first scaling factor among the first set of scaling factors is determined according to the size of the target cell for cell changing, and a second scaling factor among the second set of scaling factors is determined according to the movement state.

5. The user equipment according to claim 4, further comprising an obtaining unit (14), configured to obtain a frequency priority order corresponding to each movement state before the second determining unit (11) determines the frequency priority order.

6. The user equipment according to claim 5, wherein:
the obtaining unit (14) is specifically configured to:
receive a system message, wherein the system message carries frequency priority order information corresponding to each movement state; and obtain the frequency priority order corresponding to each movement state according to the system message;
or
receive a dedicated message, wherein the dedicated message carries frequency priority order information corresponding to each movement state; and obtain the frequency priority order corresponding to each movement state according to the dedicated message;
or
obtain the frequency priority order corresponding to each movement state according to pre-stored frequency priority order information.

## Patentansprüche

1. Verfahren zur Zellenänderung eines Benutzergeräts in einem heterogenen Netz, das Folgendes umfasst:
Bestimmen (101), durch das Benutzergerät, eines Bewegungszustands des Benutzergeräts;
Bestimmen (102), durch das Benutzergerät, einer Frequenzprioritätsreihenfolge gemäß dem bestimmten Bewegungszustand, wobei: wenn der Bewegungszustand ein hoher Bewegungszustand ist, in dem die Anzahl an Zellenänderungen in einer spezifizierten Zeit eine erste Schwelle überschreitet, eine Priorität einer Frequenz, die durch eine Zelle mit einer breiten Abdeckung in dem heterogenen Netz verwendet wird, höher als eine Priorität einer Frequenz ist, die durch eine Zelle mit einer kleinen Abdeckung verwendet wird, und, wenn der Bewegungszustand ein niedriger Bewegungszustand ist, in dem die Anzahl an Zellenänderungen in einer spezifizierten Zeit niedriger als eine zweite Schwelle ist, eine Priorität einer Frequenz, die durch eine Zelle mit einer breiten Abdeckung in dem heterogenen Netz verwendet wird, niedriger als eine Priorität einer Frequenz ist, die durch eine Zelle mit einer kleinen Abdeckung verwendet wird;
Durchführen (103), durch das Benutzergerät, einer Frequenzmessung gemäß der bestimmten Frequenzprioritätsreihenfolge und dem bestimmten Bewegungszustand; und
Durchführen (104), durch das Benutzergerät, einer Zellenänderung gemäß der vorbestimmten Prioritätsreihenfolge und einem Ergebnis der Frequenzmessung, wobei das Durchführen (103) der Frequenzmessung gemäß der vorbestimmten Frequenzreihenfolge und dem vorbestimmten Bewegungszustand Folgendes umfasst: wenn der Bewegungszustand der hohe Bewegungszustand ist, in dem die Anzahl an Zellenänderungen in der spezifizierten Zeit die erste Schwelle überschreitet, falls eine Signalstärke oder Signalqualität einer aktuellen versorgenden Zelle größer als eine erste Grenze ist, Messen wenigstens einer Frequenz mit hoher Priorität in dem heterogenen Netz bei Intervallen einer ersten spezifizierten Zeit; und
falls die Signalstärke oder die Signalqualität der aktuellen versorgenden Zelle kleiner als die erste Grenze ist, Messen aller Frequenzen in dem heterogenen Netz bei Intervallen der ersten spezifizierten Zeit; und
wenn der Bewegungszustand der niedrige Bewegungszustand ist, in dem die Anzahl an Zellenänderungen in der spezifizierten Zeit niedriger als die zweite Schwelle ist, falls eine Signalstärke oder Signalqualität einer aktuellen versorgenden Zelle größer als eine erste Grenze ist,
Messen wenigstens einer Frequenz mit hoher Priorität in dem heterogenen Netz bei Intervallen einer ersten spezifizierten Zeit;
falls keine Zelle bei der wenigstens einen Frequenz mit hoher Priorität in einer zweiten spezifizierten Zeit gefunden wird, Messen der wenigstens einen Frequenz mit hoher Priorität bei Intervallen einer dritten spezifizierten Zeit, wobei die dritte spezifizierte Zeit größer als die erste spezifizierte Zeit ist;
nachdem wenigstens eine Zelle bei der wenigstens einen Frequenz mit hoher Priorität gefunden wurde, Messen der wenigstens einen Frequenz mit hoher Priorität bei Intervallen der ersten spezifizierten Zeit; und
falls die Signalstärke oder die Signalqualität der aktuellen versorgenden Zelle kleiner als die erste Grenze ist, Messen aller Frequenzen in dem heterogenen Netz bei Intervallen der ersten spezifizierten Zeit; und
wobei das Durchführen (104) der Zellenänderung Folgendes umfasst: Auswählen, durch das Benutzergerät, eines Skalierungsfaktors, der dem aktuellen Bewegungszustand des Benutzergeräts entspricht, gemäß einem Bewegungszustand eines Benutzergeräts und Skalieren einer relevanten Hysterese, die zur Zellenneuwahl oder zum "Handover" verwendet wird, und dann Durchführen, durch das Benutzergerät, der Zellenänderung gemäß der Frequenzprioritätsreihenfolge, dem Ergebnis der Frequenzmessung und der skalierten relevanten Hysterese,
wobei das Benutzergerät in dem heterogenen Netz zwei Sätze von Skalierungsfaktoren zum jeweiligen Skalieren der Hysterese verwendet und die zwei Sätze von Skalierungsfaktoren jeweils der Größe einer Zielzelle und dem Bewegungszustand des Benutzergeräts entsprechen, und
wobei ein erster Skalierungsfaktor unter dem ersten Satz von Skalierungsfaktoren gemäß der Größe der Zielzelle zur Zellenänderung bestimmt wird und ein zweiter Skalierungsfaktor unter dem zweiten Satz von Skalierungsfaktoren gemäß dem Bewegungszustand bestimmt wird.

2. Verfahren nach Anspruch 1, wobei:
das Verfahren vor dem Bestimmen (102) einer Frequenzprioritätsreihenfolge gemäß dem bestimmten Bewegungszustand ferner Folgendes umfasst:
Erhalten einer Frequenzprioritätsreihenfolge, die jedem Bewegungszustand entspricht.

3. Verfahren nach Anspruch 2, wobei:
das Erhalten einer Frequenzprioritätsreihenfolge, die jedem Bewegungszustand entspricht, Folgendes umfasst:
Empfangen einer Systemnachricht, wobei die Systemnachricht Frequenzprioritätsreihenfolgeninformationen trägt, die jedem Bewegungszustand entsprechen; und
Erhalten der Frequenzprioritätsreihenfolge, die jedem Bewegungszustand entspricht, gemäß der Systemnachricht;
oder
Empfangen einer dedizierten Nachricht, wobei die dedizierte Nachricht Frequenzprioritätsreihenfolgeninformationen trägt, die jedem Bewegungszustand entsprechen; und
Erhalten der Frequenzprioritätsreihenfolge, die jedem Bewegungszustand entspricht, gemäß der dedizierten Nachricht;
oder
Erhalten der Frequenzprioritätsreihenfolge, die jedem Bewegungszustand entspricht, gemäß vorgespeicherten Frequenzprioritätsreihenfolgeninformationen.

4. Benutzergerät, das Folgendes umfasst:
eine erste Bestimmungseinheit (10), die zum Bestimmen eines Bewegungszustands des Benutzergeräts konfiguriert ist;
eine zweite Bestimmungseinheit (11), die zum Bestimmen einer Frequenzprioritätsreihenfolge gemäß dem Bewegungszustand konfiguriert ist, der durch die erste Bestimmungseinheit (10) bestimmt wird, wobei: wenn der Bewegungszustand ein hoher Bewegungszustand ist, in dem die Anzahl an Zellenänderungen in einer spezifizierten Zeit eine erste Schwelle überschreitet, eine Priorität einer Frequenz, die durch eine Zelle mit einer breiten Abdeckung in dem heterogenen Netz verwendet wird, höher als eine Priorität einer Frequenz ist, die durch eine Zelle mit einer kleinen Abdeckung verwendet wird, und, wenn der Bewegungszustand ein niedriger Bewegungszustand ist, in dem die Anzahl an Zellenänderungen in einer spezifizierten Zeit niedriger als eine zweite Schwelle ist, eine Priorität einer Frequenz, die durch eine Zelle mit einer breiten Abdeckung in dem heterogenen Netz verwendet wird, niedriger als eine Priorität einer Frequenz ist, die durch eine Zelle mit einer kleinen Abdeckung verwendet wird;
eine Messeinheit (12), die zum Durchführen einer Frequenzmessung gemäß der durch die zweite Bestimmungseinheit (11) bestimmten Frequenzprioritätsreihenfolge und dem durch die erste Bestimmungseinheit (10) bestimmten Bewegungszustand konfiguriert ist; und
eine Verarbeitungseinheit (13), die zum Durchführen einer Zellenänderung gemäß der durch die zweite Bestimmungseinheit (11) vorbestimmten Prioritätsreihenfolge und einem Ergebnis der durch die Messeinheit (12) durchgeführten Frequenzmessung konfiguriert ist,
wobei die Messeinheit (12) speziell zu Folgendem konfiguriert ist:
wenn der Bewegungszustand der hohe Bewegungszustand ist, in dem die Anzahl an Zellenänderungen in der spezifizierten Zeit die erste Schwelle überschreitet,
falls eine Signalstärke oder Signalqualität einer aktuellen versorgenden Zelle größer als eine erste Grenze ist, Messen wenigstens einer Frequenz mit hoher Priorität in dem heterogenen Netz bei Intervallen einer ersten spezifizierten Zeit; und
falls die Signalstärke oder die Signalqualität der aktuellen versorgenden Zelle kleiner als die erste Grenze ist, Messen aller Frequenzen in dem heterogenen Netz bei Intervallen der ersten spezifizierten Zeit;
und
wenn der Bewegungszustand der niedrige Bewegungszustand ist, in dem die Anzahl an Zellenänderungen in der spezifizierten Zeit niedriger als die zweite Schwelle ist, falls eine Signalstärke oder Signalqualität einer aktuellen versorgenden Zelle größer als eine erste Grenze ist,
Messen wenigstens einer Frequenz mit hoher Priorität in dem heterogenen Netz bei Intervallen einer ersten spezifizierten Zeit; und
falls keine Zelle bei der wenigstens einen Frequenz mit hoher Priorität in einer zweiten spezifizierten Zeit gefunden wird, Messen der wenigstens einen Frequenz mit hoher Priorität bei Intervallen einer dritten spezifizierten Zeit, wobei die dritte spezifizierte Zeit größer als die erste spezifizierte Zeit ist;
Messen der wenigstens einen Frequenz mit hoher Priorität bei Intervallen der ersten spezifizierten Zeit, nachdem wenigstens eine Zelle bei der wenigstens einen Frequenz mit hoher Priorität gefunden wurde; und
falls die Signalstärke oder die Signalqualität der aktuellen versorgenden Zelle kleiner als die erste Grenze ist, Messen aller Frequenzen in dem heterogenen Netz bei Intervallen der ersten spezifizierten Zeit, und
wobei die Verarbeitungseinheit (13) Folgendes beinhaltet:
ein Empfangsmodul (135), das zum Empfangen einer Hysterese konfiguriert ist, die zur Zellenänderung von einer aktuellen versorgenden Zelle verwendet wird, wobei die Hysterese durch die versorgende Zelle gemäß einer Größe einer Zielzelle für die Zellenänderung erhalten wird;
ein Bestimmungsmodul (136), das zum Bestimmen eines Skalierungsfaktors gemäß dem bestimmten Bewegungszustand konfiguriert ist;
ein Skalierungsmodul (137), das zum Skalieren der empfangen Hysterese gemäß dem bestimmten Skalierungsfaktor konfiguriert ist; und
ein Verarbeitungsmodul (138), das zum Durchführen der Zellenänderung gemäß der Frequenzprioritätsreihenfolge, dem Ergebnis der Frequenzmessung und der skalierten relevanten Hysterese konfiguriert ist,
wobei das Benutzergerät in dem heterogenen Netz zwei Sätze von Skalierungsfaktoren zum jeweiligen Skalieren der Hysterese verwendet und die zwei Sätze von Skalierungsfaktoren jeweils der Größe einer Zielzelle und dem Bewegungszustand des Benutzergeräts entsprechen, und
wobei ein erster Skalierungsfaktor unter dem ersten Satz von Skalierungsfaktoren gemäß der Größe der Zielzelle zur Zellenänderung bestimmt wird und ein zweiter Skalierungsfaktor unter dem zweiten Satz von Skalierungsfaktoren gemäß dem Bewegungszustand bestimmt wird.

5. Benutzergerät nach Anspruch 4, das ferner eine Erhalteeinheit (14) umfasst, die zum Erhalten einer Frequenzprioritätsreihenfolge konfiguriert ist, die jedem Bewegungszustand entspricht, bevor die zweite Bestimmungseinheit (11) die Frequenzprioritätsreihenfolge bestimmt.

6. Benutzergerät nach Anspruch 5, wobei:
die Erhalteeinheit (14) speziell zu Folgendem konfiguriert ist:
Empfangen einer Systemnachricht, wobei die Systemnachricht Frequenzprioritätsreihenfolgeninformationen trägt, die jedem Bewegungszustand entsprechen; und Erhalten der Frequenzprioritätsreihenfolge, die jedem Bewegungszustand entspricht, gemäß der Systemnachricht;
oder
Empfangen einer dedizierten Nachricht, wobei die dedizierte Nachricht Frequenzprioritätsreihenfolgeninformationen trägt, die jedem Bewegungszustand entsprechen; und Erhalten der Frequenzprioritätsreihenfolge, die jedem Bewegungszustand entspricht, gemäß der dedizierten Nachricht;
oder
Erhalten der Frequenzprioritätsreihenfolge, die jedem Bewegungszustand entspricht, gemäß vorgespeicherten Frequenzprioritätsreihenfolgeninformationen.

## Revendications

1. Procédé de changement de cellule d'un équipement d'utilisateur dans un réseau hétérogène, comprenant les étapes consistant à :
déterminer (101), par l'équipement d'utilisateur, un état de déplacement de l'équipement d'utilisateur ;
déterminer (102), par l'équipement d'utilisateur, un ordre de priorité de fréquence selon l'état de déplacement déterminé, où : quand l'état de déplacement est un état de déplacement haut où le nombre de changements de cellule pendant une période de temps spécifiée dépasse un premier seuil, une priorité d'une fréquence utilisée par une cellule avec une large couverture dans le réseau hétérogène est supérieure à une priorité d'une fréquence utilisée par une cellule avec une faible couverture, et quand l'état de déplacement est un état de déplacement bas où le nombre de changements de cellule pendant une période de temps spécifiée est inférieur à un second seuil, une priorité d'une fréquence utilisée par une cellule avec une large couverture dans le réseau hétérogène est inférieure à une priorité d'une fréquence utilisée par une cellule avec une faible couverture ;
réaliser (103), par l'équipement d'utilisateur, une mesure de fréquence selon l'ordre de priorité de fréquence déterminé et l'état de déplacement déterminé ; et
réaliser (104), par l'équipement d'utilisateur, un changement de cellule selon l'ordre de priorité de fréquence déterminé et un résultat de la mesure de fréquence,
la réalisation (103) de la mesure de fréquence selon l'ordre de priorité de fréquence déterminé et l'état de déplacement déterminé comprenant les étapes consistant à :
quand l'état de déplacement est l'état de déplacement haut où le nombre de changements de cellule pendant la période de temps spécifiée dépasse le premier seuil, si une puissance de signal ou une qualité de signal d'une cellule de desserte actuelle est supérieure à une première démarcation, mesurer au moins une fréquence à haute priorité dans le réseau hétérogène à des intervalles d'une première période de temps spécifiée ; et
si la puissance de signal ou la qualité de signal de la cellule de desserte actuelle est inférieure à la première démarcation, mesurer toutes les fréquences dans le réseau hétérogène à des intervalles de la première période de temps spécifiée ;
et
quand l'état de déplacement est l'état de déplacement bas où le nombre de changements de cellule pendant la période de temps spécifiée est inférieur au second seuil,
si une puissance de signal ou une qualité de signal d'une cellule de desserte actuelle est supérieure à une première démarcation,
mesurer au moins une fréquence à haute priorité dans le réseau hétérogène à des intervalles d'une première période de temps spécifiée ;
si aucune cellule n'est trouvée à l'au moins une fréquence à haute priorité pendant une deuxième période de temps spécifiée, mesurer l'au moins une fréquence à haute priorité à des intervalles d'une troisième période de temps spécifiée, la troisième période de temps spécifiée étant supérieure à la première période de temps spécifiée ; après qu'au moins une cellule a été trouvée à l'au moins une fréquence à haute priorité, mesurer l'au moins une fréquence à haute priorité à des intervalles de la première période de temps spécifiée ; et
si la puissance de signal ou la qualité de signal de la cellule de desserte actuelle est inférieure à la première démarcation, mesurer toutes les fréquences dans le réseau hétérogène à des intervalles de la première période de temps spécifiée, et
la réalisation (104) du changement de cellule comprenant les étapes consistant à: sélectionner, par l'équipement d'utilisateur, un facteur d'échelle correspondant à l'état de déplacement actuel de l'équipement d'utilisateur selon un état de déplacement d'un équipement d'utilisateur et mettre à l'échelle une hystérésis pertinente utilisée pour une resélection de cellule ou un transfert intercellulaire, puis réaliser, par l'équipement d'utilisateur, le changement de cellule selon l'ordre de priorité de fréquence, le résultat de la mesure de fréquence et l'hystérésis pertinente mise à l'échelle,
l'équipement d'utilisateur, dans le réseau hétérogène, utilisant respectivement deux ensembles de facteurs d'échelle pour mettre à l'échelle l'hystérésis, et les deux ensembles de facteurs d'échelle correspondant respectivement à la taille d'une cellule cible et à l'état de déplacement de l'équipement d'utilisateur, et
un premier facteur d'échelle parmi le premier ensemble de facteurs d'échelle étant déterminé selon la taille de la cellule cible pour un changement de cellule, et un second facteur d'échelle parmi le second ensemble de facteurs d'échelle étant déterminé selon l'état de déplacement.

2. Procédé selon la revendication 1, dans lequel :
le procédé comprend en outre, avant la détermination (102) d'un ordre de priorité de fréquence selon l'état de déplacement déterminé, l'étape consistant à :
obtenir un ordre de priorité de fréquence correspondant à chaque état de déplacement.

3. Procédé selon la revendication 2, dans lequel :
l'obtention d'un ordre de priorité de fréquence correspondant à chaque état de déplacement comprend les étapes consistant à :
recevoir un message de système, le message de système transportant une information d'ordre de priorité de fréquence correspondant à chaque état de déplacement ; et obtenir l'un ordre de priorité de fréquence correspondant à chaque état de déplacement selon le message de système ;
ou
recevoir un message dédié, le message dédié transportant une information d'ordre de priorité de fréquence correspondant à chaque état de déplacement ; et
obtenir l'ordre de priorité de fréquence correspondant à chaque état de déplacement selon le message dédié ;
ou
obtenir l'ordre de priorité de fréquence correspondant à chaque état de déplacement selon une information d'ordre de priorité de fréquence pré-stockée.

4. Équipement d'utilisateur, comprenant :
une première unité de détermination (10), configurée pour déterminer un état de déplacement de l'équipement d'utilisateur ;
une seconde unité de détermination (11), configurée pour déterminer un ordre de priorité de fréquence selon l'état de déplacement déterminé par la première unité de détermination (10), où : quand l'état de déplacement est un état de déplacement haut où le nombre de changements de cellule pendant une période de temps spécifiée dépasse un premier seuil, une priorité d'une fréquence utilisée par une cellule avec une large couverture dans le réseau hétérogène est supérieure à une priorité d'une fréquence utilisée par une cellule avec une faible couverture, et quand l'état de déplacement est un état de déplacement bas où le nombre de changements de cellule pendant une période de temps spécifiée est inférieur à un second seuil, une priorité d'une fréquence utilisée par une cellule avec une large couverture dans le réseau hétérogène est inférieure à une priorité d'une fréquence utilisée par une cellule avec une faible couverture ;
une unité de mesure (12), configurée pour réaliser une mesure de fréquence selon l'ordre de priorité de fréquence qui a été déterminé par la seconde unité de détermination (11) et l'état de déplacement déterminé qui a été déterminé par la première unité de détermination (10) ; et
une unité de traitement (13), configurée pour réaliser un changement de cellule selon l'ordre de priorité de fréquence déterminé par la seconde unité de détermination (11) et un résultat de la mesure de fréquence réalisée par l'unité de mesure (12),
l'unité de mesure (12) étant spécifiquement configurée pour :
quand l'état de déplacement est l'état de déplacement haut où le nombre de changements de cellule pendant la période de temps spécifiée dépasse le premier seuil, si une puissance de signal ou une qualité de signal d'une cellule de desserte actuelle est supérieure à une première démarcation, mesurer au moins une fréquence à haute priorité dans le réseau hétérogène à des intervalles d'une première période de temps spécifiée ; et
si la puissance de signal ou la qualité de signal de la cellule de desserte actuelle est inférieure à la première démarcation, mesurer toutes les fréquences dans le réseau hétérogène à des intervalles de la première période de temps spécifiée ;
et
quand l'état de déplacement est l'état de déplacement bas où le nombre de changements de cellule pendant la période de temps spécifiée est inférieur au second seuil,
si une puissance de signal ou une qualité de signal d'une cellule de desserte actuelle est supérieure à une première démarcation,
mesurer au moins une fréquence à haute priorité dans le réseau hétérogène à des intervalles d'une première période de temps spécifiée ; et
si aucune cellule n'est trouvée à l'au moins une fréquence à haute priorité pendant une deuxième période de temps spécifiée, mesurer l'au moins une fréquence à haute priorité à des intervalles d'une troisième période de temps spécifiée, la troisième période de temps spécifiée étant supérieure à la première période de temps spécifiée ; mesurer l'au moins une fréquence à haute priorité à des intervalles de la première période de temps spécifiée après qu'au moins une cellule a été trouvée à l'au moins une fréquence à haute priorité ; et
si la puissance de signal ou la qualité de signal de la cellule de desserte actuelle est inférieure à la première démarcation, mesurer toutes les fréquences dans le réseau hétérogène à des intervalles de la première période de temps spécifiée, et
l'unité de traitement (13) comprenant :
un module de réception (135), configuré pour recevoir une hystérésis utilisée pour un changement de cellule depuis une cellule de desserte actuelle, l'hystérésis étant obtenue par la cellule de desserte selon une taille d'une cellule cible pour un changement de cellule ;
un module de détermination (136), configuré pour déterminer un facteur d'échelle selon l'état de déplacement déterminé ;
un module de mise à l'échelle (137), configuré pour mettre à l'échelle l'hystérésis reçue selon le facteur d'échelle déterminé ; et
un module de traitement (138), configuré pour réaliser le changement de cellule selon l'ordre de priorité de fréquence, le résultat de la mesure de fréquence et l'hystérésis mise à l'échelle,
l'équipement d'utilisateur, dans le réseau hétérogène, utilisant respectivement deux ensembles de facteurs d'échelle pour mettre à l'échelle l'hystérésis, et les deux ensembles de facteurs d'échelle correspondant respectivement à la taille de la cellule cible et à l'état de déplacement de l'équipement d'utilisateur, et
un premier facteur d'échelle parmi le premier ensemble de facteurs d'échelle étant déterminé selon la taille de la cellule cible pour un changement de cellule, et un second facteur d'échelle parmi le second ensemble de facteurs d'échelle étant déterminé selon l'état de déplacement.

5. Équipement d'utilisateur selon la revendication 4, comprenant en outre une unité d'obtention (14), configurée pour obtenir un ordre de priorité de fréquence correspondant à chaque état de déplacement avant que la seconde unité de détermination (11) ne détermine l'ordre de priorité de fréquence.

6. Équipement d'utilisateur selon la revendication 5, dans lequel :
l'unité d'obtention (14) est spécifiquement configurée pour :
recevoir un message de système, le message de système transportant une information d'ordre de priorité de fréquence correspondant à chaque état de déplacement ; et obtenir l'ordre de priorité de fréquence correspondant à chaque état de déplacement selon le message de système ;
ou
recevoir un message dédié, le message dédié transportant une information d'ordre de priorité de fréquence correspondant à chaque état de déplacement ; et obtenir l'ordre de priorité de fréquence correspondant à chaque état de déplacement selon le message dédié ;
ou
obtenir l'un ordre de priorité de fréquence correspondant à chaque état de déplacement selon une information d'ordre de priorité de fréquence pré-stockée.
